# EUROPEAN PATENT APPLICATION

(11) **EP 4 640 867 A1**
(43) Date of publication of application: **29.10.2025**
(21) Application number: 23907309.1
(22) Date of filing: 21.09.2023
(51) Int. Cl.: C22C 38/02, C22C 38/04, C22C 38/06, C22C 38/00, C22C 38/14, C22C 38/12, C22C 38/42, C22C 38/50, C21D 8/12

(54) **NON-ORIENTED ELECTRICAL STEEL SHEET AND METHOD FOR MANUFACTURING SAME**

(30) Priority: 21.12.2022 KR 20220180987
(71) Applicant: POSCO Co., Ltd, Pohang-si, Gyeongsangbuk-do 37859 (KR)
(72) Inventor: HONG, Jaewan, Pohang-si, Gyeongsangbuk-do 37859 (KR); LEE, Sangwoo, Pohang-si, Gyeongsangbuk-do 37859 (KR); PARK, Junesoo, Pohang-si, Gyeongsangbuk-do 37859 (KR)
(74) Representative: Meissner Bolte Partnerschaft mbB
(86) International application number: PCT/KR2023/014382
(87) International publication number: WO 2024/136023

(57) **Abstract**

A non-oriented electrical steel sheet according to an embodiment of the present invention includes, in wt%, Si: 3.0 to 5.0%, Mn: 0.1 to 1.4%, and Al: 0.3 to 1.3%, with the balance being Fe and inevitable impurities.

In the non-oriented electrical steel sheet according to the embodiment of the present invention, when a 5 mm × 5 mm area on the surface is observed, the length of unevenness having a height difference of 1.0 µm or more compared to the average height may be 3 mm or less.

## Description

### [Technical Field]

An embodiment of the present invention relates to a non-oriented electrical steel sheet and a method for manufacturing the same. Specifically, an embodiment of the present invention relates to a non-oriented electrical steel sheet and a method for manufacturing the same that may improve surface properties and magnetism by reducing temperature deviation along the entire length of a coil during hot rolling through accelerated rolling during hot rolling.

### [Background Art]

A non-oriented electrical steel sheet is mainly used in a motor that converts electrical energy to mechanical energy, and an excellent magnetic characteristic of the non-oriented electrical steel sheet is required to achieve high efficiency while the motor converts the electrical energy to the mechanical energy. In particular, recently, as environmentally-friendly vehicles driven by motors instead of internal combustion engines have been gaining attention, the demand for non-oriented electrical steel sheets used as driving motor core materials is increasing, and for this purpose, non-oriented electrical steel sheets with excellent magnetic properties and strength are required. The magnetic properties of non-oriented electrical steel sheets are mainly evaluated by iron loss and magnetic flux density. The iron loss means energy loss occurring at a specific magnetic flux density and frequency, and the magnetic flux density means a degree of magnetization obtained in a specific magnetic field. Lower iron loss allows for more energy-efficient motors to be manufactured under the same conditions, and higher magnetic flux density allows for smaller motors or reduced copper loss. Therefore, by using non-oriented electrical steel sheets with low iron loss and high magnetic flux density, a driving motor with excellent efficiency and torque may be manufactured, thereby improving the driving range and output of environmentally-friendly vehicles. Depending on operational conditions of the motor, the characteristics of the non-oriented electrical steel sheet that should be considered is also varied. The general standard for evaluating the characteristics of non-oriented electrical steel sheets used in motors is widely used as W15/50, which is the iron loss when a 1.5T magnetic field is applied at a commercial frequency of 50Hz. However, in the case of non-oriented electrical steel sheets with a thickness of 0.35 mm or less used in environmentally-friendly vehicle driving motors, magnetic properties are often important at low magnetic fields of 1.0 T or less and high frequencies of 400 Hz or higher, so the properties of non-oriented electrical steel sheets are often evaluated using the W10/400 iron loss. A commonly used method to improve the magnetic properties of non-oriented electrical steel sheets is to add alloying elements such as Si, Al, and Mn. When the specific resistance of the steel increases through the addition of these alloying elements, the eddy current loss decreases lowering the overall iron loss. Additionally, these alloying elements may be dissolved in iron as substitutional elements to cause a strengthening effect, thereby increasing strength. On the contrary, as the amount of alloy elements such as Si, Al, and Mn added increases, the magnetic flux density is deteriorated and brittleness increases, and when more than a certain amount thereof is added, it may not be cold-rolled and may not be able to be commercially produced. In particular, as the thickness of electrical steel sheets is reduced, high-frequency iron loss becomes better, but the reduction in rollability due to brittleness becomes a critical problem. There is a limit to the maximum total content of Si, Al, and Mn that may be commercially produced, and by optimizing the content of trace elements, it is possible to produce the highest quality non-oriented electrical steel with excellent magnetism and strength. Meanwhile, the surface shape of the steel sheet also affects magnetism, but no technology has been proposed to improve this.

### [Disclosure]

### [Technical Problem]

An embodiment of the present invention provides a non-oriented electrical steel sheet and a method for manufacturing the same. Specifically, an embodiment of the present invention attempts to provide a non-oriented electrical steel sheet and a method for manufacturing the same that may improve surface properties and magnetism by reducing temperature deviation along the entire length of a coil during hot rolling through accelerated rolling during hot rolling.

### [Technical Solution]

A non-oriented electrical steel sheet according to an embodiment of the present invention includes, in wt%, Si: 3.0 to 5.0%, Mn: 0.1 to 1.4%, and Al: 0.3 to 1.3%, with the balance being Fe and inevitable impurities.

In the non-oriented electrical steel sheet according to the embodiment of the present invention, when a 5 mm × 5 mm area on the surface is observed, the length of unevenness having a height difference of 1.0 µm or more compared to the average height may be 3 mm or less.

A magnetic flux density B50 is 1.603 + 0.96 × t² (T) or more with respect to a thickness t (mm) of the steel sheet, and an iron loss W10/400 is 7.231 + 21.385 × t (W/kg) or less.

The non-oriented electrical steel sheet according to the embodiment of the present invention may further include one or more of P: 0.1 wt% or less (excluding 0%), Sn: 0.1 wt% or less (excluding 0%), and Sb: 0.1 wt% or less (excluding 0%).

The non-oriented electrical steel sheet according to the embodiment of the present invention may further include one or more of C: 0.005 wt% or less (excluding 0%), N: 0.005 wt% or less (excluding 0%), S: 0.005 wt% or less (excluding 0%), Ti: 0.005 wt% or less (excluding 0%), Nb: 0.005 wt% or less (excluding 0%), and V: 0.005 wt% or less (excluding 0%).

The non-oriented electrical steel sheet according to the embodiment of the present invention may further include one or more of Cu: 0.005 to 0.2 wt%, Cr: 0.01 to 0.5 wt%, Ni: 0.05 wt% or less (excluding 0%), and Zn: 0.01 wt% or less (excluding 0%).

The non-oriented electrical steel sheet according to the embodiment of the present invention may further include one or more of Bi: 0.200 wt% or less (excluding 0%), Pb: 0.200 wt% or less (excluding 0%), Ge: 0.200 wt% or less (excluding 0%), and As: 0.200 wt% or less (excluding 0%).

The non-oriented electrical steel sheet according to the embodiment of the present invention may further include one or more of Mo: 0.03 wt% or less (excluding 0%), B: 0.0050 wt% or less (excluding 0%), Ca: 0.0050 wt% or less (excluding 0%), Zr: 0.005 wt% or less (excluding 0%), and Mg: 0.0050 wt% or less (excluding 0%).

Another embodiment of the present invention provides a method for manufacturing a non-oriented electrical steel sheet, including: a step of hot rolling a slab including, in wt%, Si: 3.0 to 5.0%, Mn: 0.1 to 1.4%, and Al: 0.3 to 1.3%, with a balance being Fe and inevitable impurities, to manufacture a hot-rolled sheet; a step of cold rolling the hot-rolled sheet to manufacture a cold-rolled sheet; and a step of annealing the cold-rolled sheet, wherein, in the step of the hot rolling, a speed at which a front end portion of a rough-rolled bar is charged into a hot finish rolling mill is 300 m/min to 800 m/min, and a speed at which a rear end portion of the rough-rolled bar is charged is 1.25 times or more the speed of the front end portion thereof.

The slab may further include one or more of P: 0.1 wt% or less (excluding 0%), Sn: 0.1 wt% or less (excluding 0%), and Sb: 0.1 wt% or less (excluding 0%).

The slab may further include one or more of C: 0.005 wt% or less (excluding 0%), N: 0.005 wt% or less (excluding 0%), S: 0.005 wt% or less (excluding 0%), Ti: 0.005 wt% or less (excluding 0%), Nb: 0.005 wt% or less (excluding 0%), and V: 0.005 wt% or less (excluding 0%).

The slab may further include one or more of Cu: 0.005 to 0.2 wt%, Cr: 0.01 to 0.5 wt%, Ni: 0.05 wt% or less (excluding 0%), and Zn: 0.01 wt% or less (excluding 0%).

The slab may further include one or more of Bi: 0.200 wt% or less (excluding 0%), Pb: 0.200 wt% or less (excluding 0%), Ge: 0.200 wt% or less (excluding 0%), and As: 0.200 wt% or less (excluding 0%).

The slab may further include one or more of Mo: 0.03 wt% or less (excluding 0%), B: 0.0050 wt% or less (excluding 0%), Ca: 0.0050 wt% or less (excluding 0%), Zr: 0.005 wt% or less (excluding 0%), and Mg: 0.0050 wt% or less (excluding 0%).

The method for manufacturing the non-oriented electrical steel sheet may further include a step of heating the slab to a temperature of 1200°C or less before the step of manufacturing the hot-rolled sheet.

In the step of manufacturing the hot-rolled sheet, a step of manufacturing a bar by rough-rolling the slab; a step of finish-rolling the bar and a step of winding the finish-rolled hot-rolled sheet may be included, and at the start of the finish-rolling step, a temperature difference between a region from the foremost end of the bar to 50 m and a region from the rearmost end to 50 m may be 30°C or less.

A speed at which the slab is charged into a hot rolling mill may be 40 m/min to 100 m/min.

The method for manufacturing the non-oriented electrical steel sheet may further include, after the step of manufacturing the hot-rolled sheet, a hot-rolled sheet annealing step of annealing the hot-rolled sheet at 600 to 1100°C.

The step of manufacturing the cold-rolled sheet may include a step of first cold rolling the hot-rolled sheet to manufacture a first cold-rolled sheet; a step of intermediate annealing the first cold-rolled sheet; and a step of second cold rolling the first cold-rolled sheet to manufacture a second cold-rolled sheet.

### [Advantageous Effects]

The non-oriented electrical steel sheet according to the embodiment of the present invention has excellent surface shape, magnetic flux density, and iron loss at the same time.

Ultimately, the non-oriented electrical steel sheet according to the embodiment of the present invention contributes to the manufacture of environmentally-friendly automobile motors, high-efficiency home appliance motors, and super premium-grade electric motors.

### [Mode for Invention]

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the remaining iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present disclosure.

A non-oriented electrical steel sheet according to an embodiment of the present invention includes, in wt%, Si: 3.0 to 5.0%, Mn: 0.1 to 1.4%, and Al: 0.3 to 1.3%, with the balance being Fe and inevitable impurities.

Hereinafter, the reason for limiting the components of the non-oriented electrical steel sheet will be described.

### Si: 3.0 to 5.0 wt%

Silicon (Si) serves to increase specific resistance of a material to decrease iron loss. When too little Si is added, an effect of improving the iron loss may be insufficient. If too much Si is added, brittleness of the material increases, and rolling productivity is rapidly deteriorated, and an oxide layer and an oxide on a surface that are harmful to magnetism may be formed. More specifically, it may be included in an amount of 3.2 wt% to 4.5 wt%. More specifically, it may be included in an amount of 3.3 to 4.0 wt%.

### Mn: 0.1 to 1.4 wt%

Manganese (Mn) improves the iron loss by increasing the specific resistance of the material and serves to form a sulfide. If too little Mn is added, the sulphide is finely formed, causing magnetic deterioration, and when too much Mn is added, fine MnS is excessively precipitated and the formation of a {111} texture unfavorable to magnetism is promoted, resulting in a rapid decrease in magnetic flux density. More specifically, it may be included in an amount of 0.3 wt% to 1.0 wt%.

### Al: 0.3 to 1.3%

Aluminum (Al) increases the specific resistance of the material, lowers iron loss, and increases strength through solid solution strengthening. If too little Al is added, fine nitrides may be formed, making it difficult to obtain the effect of improving magnetism. If too much Al is added, the nitride is excessively formed, deteriorating the magnetism, and causing problems in all processes such as steel making and continuous casting, which may considerably reduce productivity. More specifically, it may be included in an amount of 0.5 wt% to 1.0 wt%. More specifically, it may be included in an amount of 0.6 to 0.9 wt%.

The non-oriented electrical steel sheet according to the embodiment of the present invention may further include one or more of P: 0.1 wt% or less (excluding 0%), Sn: 0.1 wt% or less (excluding 0%), and Sb: 0.1 wt% or less (excluding 0%).

### P at 0.1 wt% or less

Phosphorus (P) is a grain boundary segregation element, and if added in excessive amounts, it may delay recrystallization, thereby deteriorating the strength uniformity in the rolling direction and the direction perpendicular to the rolling direction. More specifically, P may be included in an amount of 0.0001 to 0.05 wt%. More specifically, P may be included in an amount of 0.001 to 0.01 wt%.

### Sn: 0.1 wt% or less (excluding 0%) and/or Sb: 0.1 wt% or less (excluding 0%)

Tin (Sn) and antimony (Sb) segregate at grain boundaries and surfaces to improve the texture of the material and suppress surface oxidation, and thus may be added to improve magnetic properties. If Sn and Sb are added too much, grain boundary segregation is severe, the surface quality is deteriorated, hardness is increased, and the cold-rolled sheet is broken, thereby reducing rollability. Therefore, one or more of Sn and Sb may be further added within the aforementioned range. More specifically, one or more of 0.001 to 0.08 wt% of Sn and 0.001 to 0.08 wt% of Sb may be further included. More specifically, one or more of 0.01 to 0.05 wt% of Sn and 0.01 to 0.05 wt% of Sb may be further included.

The non-oriented electrical steel sheet according to the embodiment of the present invention may further include one or more of C: 0.005 wt% or less (excluding 0%), N: 0.005 wt% or less (excluding 0%), S: 0.005 wt% or less (excluding 0%), Ti: 0.005 wt% or less (excluding 0%), Nb: 0.005 wt% or less (excluding 0%), and V: 0.005 wt% or less (excluding 0%).

### C: 0.0050 wt% or less

Carbon (C) causes magnetic aging and combines with other impurity elements to form carbides, which deteriorates magnetic properties, but improves strength by hindering dislocation movement. If too much C is included, the fine carbide fraction may increase, which may deteriorate the magnetism. The lower limit of C is not particularly limited, but considering productivity, it may be included in an amount of 0.0005 wt% or more. That is, C may be included in an amount of 0.0005 wt% to 0.0050 wt%. More specifically, it may be included in an amount of 0.0010 wt% to 0.0030 wt%.

### N: 0.0050 wt% or less

Nitrogen (N) not only forms fine AIN precipitates inside the base material, but also combines with other impurities to form fine precipitates, suppressing grain growth and worsening iron loss. Accordingly, N may be included in an amount of 0.0050 wt% or less. The lower limit of N is not particularly limited, but since N helps improve strength, the lower limit may be set to 0.0003 wt%. That is, N may be included in an amount of 0.0003 to 0.0050 wt%. More specifically, it may be included in an amount of 0.0010 wt% to 0.0030 wt%.

### S: 0.0050 wt% or less

Sulfur (S) forms fine precipitates, MnS and CuS, which worsen magnetic properties and hot workability. However, in an embodiment of the present invention, it helps in the development of grains having a specific orientation and helps in improving the magnetic flux density, so it may be added in an amount of 0.0005 wt% or more in the embodiment of the present invention. More specifically, S may be included in an amount of 0.0010 to 0.0030 wt%.

### Ti: 0.0050 wt% or less

Titanium (Ti) has a strong tendency to form precipitates inside the steel, and they deteriorate the iron loss by forming fine carbides, nitrides, or sulfides inside the base material, thereby suppressing grain growth and domain wall movement. Therefore, the Ti content may be 0.0050 wt% or less. The lower limit thereof is not particularly limited, but it may be set at 0.0003 wt% due to steelmaking costs. That is, each may include 0.0003 to 0.0050 wt% of Ti. More specifically, it may be included in an amount of 0.0003 wt% to 0.0030 wt%.

### Nb: 0.0050 wt% or less

Niobium(Nb) has a strong tendency to form precipitates inside the steel, and they deteriorate the iron loss by forming fine carbides, nitrides, or sulfides inside the base material, thereby suppressing grain growth and domain wall movement. Therefore, the Nb content may be 0.0050 wt% or less. The lower limit thereof is not particularly limited, but it may be set at 0.0003 wt% due to steelmaking costs. That is, Nb may be included in an amount of 0.0003 to 0.0050 wt%. More specifically, Nb may be included in an amount of 0.0003 to 0.0030 wt%.

### V: 0.0050 wt% or less

Vanadium (V) has a strong tendency to form precipitates inside the steel, and they deteriorate the iron loss by forming fine carbides, nitrides, or sulfides inside the base material, thereby suppressing grain growth and domain wall movement. Therefore, the content of V may each be 0.0050 wt% or less. The lower limit thereof is not particularly limited, but it may be set at 0.0003 wt% due to steelmaking costs. That is, V may be included in an amount of 0.0003 to 0.0050 wt%. More specifically, V may be included in an amount of 0.0003 to 0.0030 wt%.

The non-oriented electrical steel sheet according to the embodiment of the present invention may further include one or more of Cu: 0.005 to 0.2 wt%, Cr: 0.01 to 0.5 wt%, Ni: 0.05 wt% or less (excluding 0%), and Zn: 0.01 wt% or less (excluding 0%).

### Cu: 0.005 to 0.2 wt%

Copper (Cu) serves to form sulfides together with Mn. If Cu is added further, if too little Cu is added, CuMnS may be finely precipitated and magnetism may be degraded. If too much Cu is added, high temperature brittleness occurs, which may form cracks during casting or hot rolling. More specifically, Cu may be included in an amount of 0.01 to 0.1 wt%.

### Cr: 0.01 to 0.50 wt%

Chromium (Cr) serves to improve iron loss by increasing specific resistance. If too little Cr is added, the effect of increasing specific resistance may not be sufficient. If too much Cr is included, the magnetic flux density may deteriorate. More specifically, when Cr is further included, 0.05 to 0.30 wt% of Cr may be included.

### Ni: 0.05 wt% or less

Nickel (Ni) may react with impurity elements to form fine sulfides, carbides, and nitrides, which may have a detrimental effect on magnetism. More specifically, Ni may be included in an amount of 0.0001 to 0.0500 wt%. More specifically, it may be included in an amount of 0.0010 wt% to 0.0100 wt%.

### Zn: 0.01 wt% or less

If the content of zinc (Zn) is excessive, it may act as an impurity and deteriorate magnetism. Therefore, Zn may be further added within the above-mentioned range. More specifically, it may be included in an amount of 0.0001 wt% to 0.0100 wt%. More specifically, it may be included in an amount of 0.0005 to 0.0050 wt%.

The non-oriented electrical steel sheet according to the embodiment of the present invention may further include one or more of Bi: 0.200 wt% or less (excluding 0%), Pb: 0.200 wt% or less (excluding 0%), Ge: 0.200 wt% or less (excluding 0%), and As: 0.200 wt% or less (excluding 0%).

When additionally added, bismuth (Bi), lead (Pb), germanium (Ge), and arsenic (As) segregate at grain boundaries, thereby alleviating stress concentration at grain boundaries during cold rolling, thereby suppressing recrystallization of <111>//ND orientation grains in the subsequent recrystallization annealing process, thereby improving magnetic flux density. If these are added appropriately, the aforementioned effects may be additionally obtained, but if they are included in too much, a large amount of segregation may occur, inhibiting grain growth and resulting in lower magnetic flux density and iron loss. More specifically, it may further include one or more of Bi: 0.0001 to 0.200 wt%, Pb: 0.0001 to 0.200 wt%, Ge: 0.0001 to 0.200 wt%, and As: 0.0001 to 0.200 wt%. More specifically, it may further include one or more of Bi: 0.0010 to 0.100 wt%, Pb: 0.0010 to 0.100 wt%, Ge: 0.0010 to 0.100 wt%, and As: 0.0010 to 0.100 wt%.

The non-oriented electrical steel sheet according to the embodiment of the present invention may further include one or more of Mo: 0.03 wt% or less (excluding 0%), B: 0.0050 wt% or less (excluding 0%), Ca: 0.0050 wt% or less (excluding 0%), Zr: 0.005 wt% or less (excluding 0%), and Mg: 0.0050 wt% or less (excluding 0%).

Since these may react with C, S, N, and the like, which are inevitably included, to form fine carbides, nitrides, or sulfides, which may adversely affect magnetism, the upper limit may be limited as described above.

More specifically, it may further include one or more of Mo: 0.0001 to 0.03 wt%, B: 0.0001 to 0.0050 wt%, Ca: 0.0001 to 0.0050 wt%, Zr: 0.0001 to 0.005 wt%, and Mg: 0.0001 to 0.0050 wt%. More specifically, it may further include one or more of Mo: 0.001 to 0.01 wt%, B: 0.0005 to 0.0030 wt%, Ca: 0.0005 to 0.0030 wt%, Zr: 0.0005 to 0.0030 wt%, and Mg: 0.0005 to 0.0030 wt%.

### Other Impurities

The balance contains Fe. In addition, impurities that are inevitably mixed may be included. The inevitable impurities are impurities mixed in the steel-making and the manufacturing process of the non-oriented electrical steel sheet, which are widely known in the field, and thus a detailed description thereof will be omitted. In the embodiment of the present invention, the addition of elements other than the above-described alloy components is not excluded, and various elements may be included within a range that does not hinder the technical concept of the present invention. When the additional elements are further included, they replace the balance of Fe.

The non-oriented electrical steel sheet according to the embodiment of the present invention has an excellent surface shape. If the surface shape is not good, the core shape when manufacturing the motor is not good, which reduces the efficiency of the motor. The surface shape of the non-oriented electrical steel sheet is mainly determined during cold rolling, and one of the factors affecting the cold rolling is the material of the hot-rolled sheet. The material deviation of the hot-rolled sheet mainly occurs due to the temperature difference between the front and rear end portions during hot finish rolling, and this may be achieved by accelerated rolling during hot rolling. A more specific method is specifically described in a method for manufacturing a non-oriented electrical steel sheet according to an embodiment of the present invention.

The non-oriented electrical steel sheet according to the embodiment of the present invention may have an average grain size of 25 to 125 µm. When an appropriate average grain size is secured, magnetism may be improved. In particular, it may improve high-frequency iron loss. In an embodiment of the present invention, the grain size means the diameter of a virtual circle having the same area as the grain area. The average grain size may be calculated as 2×(measured area ÷ number of grains ÷ π)^{0.5}. The grain size may be measured based on the plane parallel to the rolling vertical plane (TD plane). The measurement position is not particularly limited, but it may be measured at a point 1/4 to 3/4 of the total thickness of the steel sheet. More specifically, the average grain size may be 60 to 95 µm.

In addition, the non-oriented electrical steel sheet according to the embodiment of the present invention has an excellent surface shape. Specifically, in the non-oriented electrical steel sheet according to the embodiment of the present invention, when a 5 mm × 5 mm area on the surface is observed, the length of unevenness having a height difference of 1.0 µm or more compared to the average height may be 3 mm or less. When an insulating film exists on the non-oriented electrical steel sheet, the insulating film may be removed and the surface properties of the non-oriented electrical steel sheet may satisfy the conditions described above. There is no particular limitation on the method for removing the insulating film, and it may be removed by immersing in a NaOH solution at a temperature of 80°C for about 30 minutes. The average height refers to the average height of the entire area (length) of the sheet of the measurement target. The height difference may be + or -, and the uneven length refers to the length in a specific direction where the length is the longest. The uneven length may be measured by a method of measuring surface roughness, such as using a confocal laser.

In addition, the non-oriented electrical steel sheet according to the embodiment of the present invention has excellent magnetic flux density and iron loss. When manufacturing a environmentally-friendly vehicle driving motor using the non-oriented electrical steel sheet according to the embodiment of the present invention, there is an advantage in terms of output and energy efficiency.

Specifically, the magnetic flux density B₅₀ of the non-oriented electrical steel sheet may be 1.603 + 0.96×t² (T) or more. In this case, t refers to the thickness (mm) of the steel sheet (mm). B₅₀ refers to the magnetic flux density induced in a magnetic field of 5000 A/m. More specifically, the magnetic flux density B₅₀ at 0.25 mm may be 1.67 to 1.70 T, the magnetic flux density B₅₀ at 0.20 mm may be 1.65 to 1.68 T, the magnetic flux density B₅₀ at 0.15 mm may be 1.63 to 1.66 T, and the magnetic flux density B₅₀ at 0.10 mm may be 1.62 to 1.65 T.

At the same time, the iron loss (W_{10/400}) of the non-oriented electrical steel sheet may be 7.231 + 21.385 × t or less. In this case, t refers to the thickness (mm) of the steel sheet (mm). More specifically, the iron loss (W_{10/400}) at 0.25 mm may be 12.3 W/kg to 10.8 W/kg, the iron loss (W_{10/400}) at 0.20 mm may be 11.3 W/kg to 9.8 W/kg, the iron loss (W_{10/400}) at 0.15 mm may be 10.1 W/kg to 8.6 W/kg, and the iron loss (W_{10/400}) at 0.10 mm may be 9 W/kg to 7.5 W/kg.

A method for manufacturing a non-oriented electrical steel sheet according to an embodiment of the present invention includes a step of hot-rolling a slab to manufacture a hot-rolled sheet; a step of cold-rolling the hot-rolled sheet to manufacture a cold-rolled sheet; and a step of annealing the cold-rolled sheet.

First, the slab is hot-rolled.

The alloy composition of the slab has been described in the alloy composition of the non-oriented electrical steel sheet described above, so duplicate descriptions will be omitted. Since the alloy composition does not substantially change during the manufacturing process of the non-oriented electrical steel sheet, the alloy composition of the non-oriented electrical steel sheet and the slab are substantially the same.

Specifically, the slab includes, in wt%, Si: 3.0 to 5.0%, Mn: 0.1 to 1.4%, and Al: 0.3 to 1.3%, with the balance being Fe and inevitable impurities.

Other additional elements have been described in the alloy composition of the non-oriented electrical steel sheet, so duplicate descriptions will be omitted.

The slab may be heated before hot-rolling. The heating temperature of the slab is not limited, but the slab may be heated at 1,200 °C or less. When the slab heating temperature is too high, precipitates such as AIN and MnS present in the slab are re-dissolved and then finely precipitated during hot-rolling and annealing, thereby inhibiting grain growth and reducing magnetism.

Next, the slab is hot-rolled to manufacture the hot-rolled sheet. In the embodiment of the present invention, the speed at which the slab is charged into a hot rough rolling mill is 40 m/min to 100 m/min, the speed at which the top end of the rough rolled bar is charged into a hot finish rolling mill is 300 m/min to 800 m/min, and the speed at which the front end portion of the rough rolled bar is charged into the hot finish rolling mill is 1.25 times or more faster than the speed at which the slab is charged into the hot rough rolling mill. In this case, the front end portion refers to a length of up to 50 m from the foremost end portion of the bar, and the rear end portion refers to a length of up to 50 m from the rearmost end portion of the bar.

. If the speed is too slow, the holding time after heating the slab varies depending on the length of the slab, resulting in a significant temperature difference in the length direction of the slab, which appears as surface defects in the final non-oriented electrical steel sheet. If the speed is too fast, the load on the rolling mill will be severe and proper rolling may not occur. More specifically, the speed at which the slab is charged into the hot rough rolling mill is 50 m/min to 900 m/min, the speed at which the top end of the rough rolled bar is charged into the hot finish rolling mill is 350 m/min to 750 m/min, and the speed at which the front end portion of the rough rolled bar is charged into the hot finish rolling mill is 1.25 to 2.0 times the speed at which the slab is charged into the hot rough rolling mill.. In the step of manufacturing the hot-rolled sheet, a step of rough rolling the slab to manufacture a bar; a step of finish-rolling the bar; and a step of winding the finish-rolled hot-rolled sheet are included.

At the start of the step of the finish-rolling, when the temperature is measured at any point between 1/4 and 3/4 of the width of the bar, the temperature difference between the region from the foremost end portion of the bar to 50 m and the region from the rearmost end portion to 50 m may be 30°C or less.

If the temperature difference is too large, unevenness is formed in the length direction of the final non-oriented electrical steel sheet, resulting in a deteriorated surface shape.

A thickness of the hot-rolled sheet may be 1.8 to 2.3 mm. In the manufacturing of the hot-rolled sheet, a finish rolling temperature may be 800 °C or higher. If the hot rolling finish-rolling temperature is too low, the rolling load increases and the hot rolling workability deteriorates. In addition, a lot of deformation structures remain in the hot-rolled steel sheet, which may cause an increase in the rolling load during the subsequent preliminary cold rolling process. In addition, during intermediate annealing, recrystallization of <111>//ND orientation grains from the deformation structure is promoted, resulting in a lower magnetic flux density. Specifically, it may be 800 to 1000 °C.

The hot-rolled sheet may be wound at temperatures of 700°C or less. If the temperature is controlled too low during the step of the winding, recovery and recrystallization of the hot-rolled deformation structure will not occur well, and the cooling load will increase to quickly cool the steel sheet to a low temperature, which may make it difficult to wind the supercooled coil. Conversely, if the temperature is too high, recovery and recrystallization may be promoted, but additional oxidation by atmospheric oxygen may occur while winded, which may cause thicker scale formation and grain boundary oxidation problems. The grain boundary oxidation of the hot-rolled sheet promotes grain boundary corrosion during the subsequent pickling process, which increases the possibility of surface stripe defects and severe wear of the rolling roll.

After the step of manufacturing the hot-rolled sheet, a step of annealing the hot-rolled sheet in a temperature range of 600 to 1100°C may be further included. If the annealing temperature of the hot-rolled sheet is too low, the recrystallized structure is not formed or grows finely, so the effect of increasing the magnetic flux density is small, while if the annealing temperature is too high, the magnetic properties may deteriorate, and the rolling workability may deteriorate due to deformation of the sheet shape. More specifically, the hot-rolled sheet may be annealed at 850 to 1000°C.

The hot-rolled sheet annealing is performed in order to increase the orientation favorable to magnetism as required, and it may be omitted. That is, after cooling the hot-rolled hot-rolled sheet to 10 to 50°C, cold rolling may be performed. The annealing form is not particularly limited, and batch or continuous annealing is possible.

The hot-rolled hot-rolled sheet may be pickled as needed.

Next, the hot-rolled sheet is cold-rolled.

The step of manufacturing the cold-rolled sheet may include a step of first cold rolling a hot-rolled sheet to manufacture a first cold-rolled sheet; a step of intermediate annealing the first cold-rolled sheet; and a step of second cold rolling the first cold-rolled sheet to manufacture a second cold-rolled sheet. It is also possible to perform cold rolling once.

In the case in which cold rolling is performed twice, the thickness of the first cold-rolled sheet may be 0.5 to 1.2 mm. If the thickness of the first cold-rolled sheet is too thin, the cold rolling itself becomes difficult and the problem of uneven surface defects becoming prominent may occur. If the thickness of the first cold-rolled sheet is too thick, it may be difficult to secure magnetic properties in the final product. More specifically, the thickness of the first cold-rolled sheet may be 0.5 to 1.0 mm.

In the step of intermediate annealing the first cold-rolled sheet, it may be annealed at 950 to 1100°C for 60 to 150 seconds. If the intermediate annealing temperature is too low, it may be difficult to secure magnetic properties in the final product. If the intermediate annealing temperature is too high, it may be difficult to perform cold rolling. More specifically, in the intermediate annealing step, it may be annealed at 950 to 1100°C for 60 to 150 seconds.

After the intermediate annealing step, a pickling process may be performed if necessary.

In the step of manufacturing the second cold-rolled sheet by second cold-rolling the first cold-rolled sheet, the thickness of the second cold-rolled sheet may be 0.10 to 0.30 mm. The thickness of the second cold-rolled sheet may be the same as the thickness of the final manufactured non-oriented electrical steel sheet.

Next, the cold-rolled sheet is subjected to cold-rolled sheet annealing.

During the cold-rolled sheet annealing, soaking is performed at a soaking temperature of 900°C or higher. If the soaking temperature is too low, sufficient grain growth may not be achieved. More specifically, the soaking temperature may be 900 to 1050°C. The soaking step may be performed for 45 to 100 seconds.

During the soaking process, the processed texture formed in the cold-rolling step may be entirely (that is, 99 % or more) recrystallized.

After soaking, an insulating film may be formed. The insulating film may be formed as an organic, inorganic, and organic/inorganic composite film, and it may be formed with other insulating coating materials.

Hereinafter, the present invention will be described in more detail through examples. However, the examples are only for illustrating the present invention, and the present invention is not limited thereto.

### Example 1

A slab was manufactured with components containing the following Table 1 and the balance Fe and other inevitable impurities. This was heated to 1150°C and hot-rolled to a thickness of 2.0 mm. The speed of the slab when charged into the hot rolling mill was controlled as shown in Table 3 below, and the temperature difference of the bar between the frontmost 50 m and the rearmost 50 m at the start of the finish rolling was measured and summarized in Table 3 below. Next, the hot-rolled sheet was cooled to room temperature in the air and first cold-rolled to a thickness of 0.8 mm, and the intermediate annealing was performed at a temperature of 1050°C for 2 minutes. After the annealing was completed, pickling was performed, and then cold rolling was performed to a thickness of 0.25 mm.

The magnetic flux density and iron loss were measured by an Epstein test. In this case, each Epstein specimen had a size of 305 mm × 30 mm. The magnetic flux density B50 is the magnitude (Tesla) of the magnetic flux density induced in a magnetic field of 5000 A/m, and the iron loss W10/400 is the loss (W/kg) when a magnetic flux density of 1.0 Tesla is induced at a frequency of 400 Hz.

The surface shape was measured using a confocal laser measuring device capable of measuring roughness and a 3D surface roughness meter. The protrusions and depressions with the maximum length among the specimens are summarized in the following Table 2.

**(Table 1)**

| Steel Type | Si | Mn | Al | P | Sn |
|---|---|---|---|---|---|
| 1 | 3.5 | 0.24 | 0.43 | 0.003 | 0.05 |
| 2 | 3 | 0.11 | 1.2 | 0.009 | 0.07 |
| 3 | 3.8 | 1.29 | 0.73 | 0.009 | 0.03 |
| 4 | 3.9 | 0.36 | 1.18 | 0.001 | 0.03 |
| 5 | 3.4 | 0.61 | 1 | 0.01 | 0.05 |
| 6 | 3.7 | 0.43 | 0.79 | 0.007 | 0.08 |
| 7 | 3.7 | 1.4 | 0.99 | 0.007 | 0.08 |
| 8 | 4.2 | 0.83 | 0.71 | 0.007 | 0.05 |
| 9 | 3.2 | 1.33 | 1.14 | 0.01 | 0.07 |
| 10 | 3.3 | 0.91 | 1.2 | 0.005 | 0.05 |
| 11 | 3.6 | 1.2 | 0.68 | 0.002 | 0.03 |
| 12 | 3.2 | 0.72 | 0.46 | 0.009 | 0.06 |
| 13 | 3.7 | 0.36 | 0.64 | 0.006 | 0.02 |
| 14 | 3.7 | 0.52 | 0.46 | 0.001 | 0.03 |
| 15 | 3.8 | 1.11 | 0.74 | 0.01 | 0.07 |
| 16 | 3.1 | 1.05 | 0.82 | 0.008 | 0.04 |
| 17 | 2.8 | 0.67 | 0.47 | 0.008 | 0.02 |
| 18 | 5.3 | 0.81 | 0.53 | 0.007 | 0.06 |
| 19 | 3.7 | 0.05 | 1.3 | 0.004 | 0.07 |
| 20 | 3.8 | 1.5 | 0.37 | 0.01 | 0.05 |
| 21 | 3.6 | 1.05 | 0.25 | 0.004 | 0.08 |
| 22 | 3.4 | 0.51 | 1.4 | 0.003 | 0.08 |
| 23 | 3.9 | 0.76 | 0.67 | - | 0.04 |
| 24 | 4.1 | 0.24 | 0.58 | 0.02 | 0.03 |
| 25 | 3.1 | 0.59 | 1.14 | 0.001 | - |
| 26 | 3.3 | 0.44 | 0.75 | 0.008 | 0.1 |
| 27 | 3.6 | 0.1 | 1.28 | 0.003 | 0.04 |
| 28 | 3 | 0.32 | 0.96 | 0.004 | 0.04 |
| 29 | 3.5 | 1.29 | 0.63 | 0.009 | 0.04 |
| 30 | 3.3 | 0.13 | 0.96 | 0.006 | 0.06 |
| 31 | 3.2 | 0.56 | 1.23 | 0.008 | 0.06 |
| 32 | 3.6 | 1.18 | 0.42 | 0.006 | 0.02 |

**(Table 2)**

| Steel Type | Sb | C | N | S | Ti |
|---|---|---|---|---|---|
| 1 | 0.04 | 0.0035 | 0.0048 | 0.0018 | 0.0011 |
| 2 | 0.08 | 0.0018 | 0.0039 | 0.002 | 0.0018 |
| 3 | 0.05 | 0.0022 | 0.0013 | 0.0018 | 0.0015 |
| 4 | 0.08 | 0.0012 | 0.0031 | 0.0023 | 0.0015 |
| 5 | 0.05 | 0.002 | 0.0019 | 0.0014 | 0.0013 |
| 6 | 0.07 | 0.0027 | 0.0009 | 0.0028 | 0.0015 |
| 7 | 0.04 | 0.0035 | 0.0019 | 0.0036 | 0.0018 |
| 8 | 0.07 | 0.0027 | 0.0045 | 0.0036 | 0.0024 |
| 9 | 0.02 | 0.0013 | 0.0014 | 0.0007 | 0.0017 |
| 10 | 0.04 | 0.0015 | 0.0036 | 0.0006 | 0.0009 |
| 11 | 0.08 | 0.0045 | 0.0027 | 0.0005 | 0.0015 |
| 12 | 0.06 | 0.0015 | 0.0029 | 0.0031 | 0.003 |
| 13 | 0.06 | 0.003 | 0.0034 | 0.0024 | 0.0027 |
| 14 | 0.02 | 0.0023 | 0.0011 | 0.0041 | 0.0006 |
| 15 | 0.07 | 0.0043 | 0.0008 | 0.0015 | 0.0004 |
| 16 | 0.06 | 0.0004 | 0.0035 | 0.0038 | 0.0012 |
| 17 | 0.05 | 0.0039 | 0.0027 | 0.0018 | 0.0041 |
| 18 | 0.02 | 0.0001 | 0.0047 | 0.0036 | 0.0034 |
| 19 | 0.03 | 0.0002 | 0.0029 | 0.0024 | 0.0006 |
| 20 | 0.07 | 0.0008 | 0.0047 | 0.0002 | 0.0011 |
| 21 | 0.06 | 0.0023 | 0.0041 | 0.0048 | 0.0019 |
| 22 | 0.03 | 0.0035 | 0.0047 | 0.0039 | 0.0047 |
| 23 | 0.03 | 0.0001 | 0.0009 | 0.0036 | 0.0046 |
| 24 | 0.08 | 0.0016 | 0.0038 | 0.0029 | 0.0021 |
| 25 | 0.01 | 0.0008 | 0.0022 | 0.0011 | 0.0022 |
| 26 | 0.01 | 0.0029 | 0.0025 | 0.0039 | 0.0013 |
| 27 | - | 0.0012 | 0.0032 | 0.0042 | 0.0032 |
| 28 | 0.1 | 0.005 | 0.0026 | 0.0022 | 0.0014 |
| 29 | 0.05 | 0.0019 | 0.0007 | 0.0048 | 0.0034 |
| 30 | 0.06 | 0.0041 | 0.0025 | 0.0012 | 0.0013 |
| 31 | 0.06 | 0.002 | 0.0027 | 0.0015 | 0.0023 |
| 32 | 0.05 | 0.001 | 0.0028 | 0.0047 | 0.0003 |

**(Table 3)**

| St eel Ty pe | Front end porti on char ging spee d | Rear end porti on char ging spee d | Temper ature deviatio n of bar | Avera ge of length thickness deviat ion of secon d cold rolling (µm) | Maxim um uneven ness lengt (mm) | B50(T esla) | Iron loss W10/ 400 (W/k g) | Remarks |
|---|---|---|---|---|---|---|---|---|
| 1 | 430 | 580 | 19 | 0.5 | 2.1 | 1.67 | 11.3 | Inventive example |
| 2 | 540 | 680 | 25 | 0.7 | 0.6 | 1.68 | 10.9 | Inventive example |
| 3 | 380 | 700 | 16 | 0.2 | 0.2 | 1.68 | 11.2 | Inventive example |
| 4 | 500 | 660 | 14 | 0.6 | 0.2 | 1.67 | 11.8 | Inventive example |
| 5 | 520 | 690 | 14 | 0.4 | 0.8 | 1.68 | 12.1 | Inventive example |
| 6 | 330 | 480 | 13 | 0.4 | 0.2 | 1.67 | 11.0 | Inventive example |
| 7 | 480 | 800 | 12 | 0.1 | 2 | 1.67 | 11.6 | Inventive example |
| 8 | 620 | 830 | 24 | 1.2 | 1.8 | 1.68 | 12.3 | Inventive example |
| 9 | 570 | 790 | 21 | 0.8 | 0.7 | 1.67 | 12.1 | Inventive example |
| 10 | 720 | 1100 | 17 | 0.1 | 0.4 | 1.67 | 11.9 | Inventive example |
| 11 | 610 | 920 | 18 | 0.3 | 1.9 | 1.68 | 11.7 | Inventive example |
| 12 | 520 | 660 | 19 | 1.4 | 0.4 | 1.69 | 11.6 | Inventive example |
| 13 | 480 | 870 | 11 | 0.5 | 1.5 | 1.67 | 12.0 | Inventive example |
| 14 | 390 | 520 | 18 | 0.9 | 0.3 | 1.70 | 11.4 | Inventive example |
| 15 | 470 | 710 | 17 | 0.3 | 0.6 | 1.68 | 12.4 | Inventive example |
| 16 | 460 | 590 | 22 | 1.4 | 2 | 1.67 | 11.7 | Inventive example |
| 17 | 500 | 720 | 12 | 0.7 | 1.8 | 1.71 | 14.8 | Comparative example |
| 18 | 610 | 900 | 17 | Cold rolling not possible | | | | Comparative example |
| 19 | 720 | 950 | 8 | 0.7 | 0.6 | 1.68 | 13.4 | Comparative example |
| 20 | 680 | 860 | 16 | 0.8 | 1.3 | 1.64 | 12.5 | Comparative example |
| 21 | 410 | 610 | 10 | 0.9 | 2 | 1.63 | 11.9 | Comparative example |
| 22 | 530 | 760 | 11 | 1.2 | 1.5 | 1.65 | 12.7 | Comparative example |
| 23 | 380 | 500 | 13 | 0.7 | 0.3 | 1.67 | 12.4 | Inventive example |
| 24 | 420 | 530 | 24 | 1.5 | 0.5 | 1.67 | 12.5 | Inventive example |
| 25 | 550 | 840 | 12 | 0.1 | 2.4 | 1.67 | 12.1 | Inventive example |
| 26 | 760 | 1200 | 15 | 0.3 | 0.3 | 1.67 | 11.9 | Inventive example |
| 27 | 710 | 930 | 19 | 1.4 | 2.3 | 1.67 | 12.4 | Inventive example |
| 28 | 630 | 900 | 24 | 0.9 | 1.4 | 1.67 | 11.8 | Inventive example |
| 29 | 270 | 400 | 35 | 2.5 | 4.2 | 1.67 | 11.8 | Comparative example |
| 30 | 400 | 430 | 38 | 3.1 | 4.9 | 1.69 | 11.3 | Comparative example |
| 31 | 880 | 950 | 43 | 3.8 | 5 | 1.68 | 11.7 | Comparative example |
| 32 | 1000 | 1400 | 40 | 2.7 | 3.8 | 1.67 | 11.5 | Comparative example |

As shown in Table 1 to Table 3, it can be confirmed that the inventive examples in which the steel composition is appropriately controlled and the charging speed is appropriately controlled during charging in the hot rolling mill have a specific texture developed, and thus the surface shape, iron loss, and magnetic flux density are excellent.

On the other hand, it can be confirmed that when the steel composition is not appropriately controlled, the iron loss and magnetic flux density are inferior.

In addition, even if the steel composition is properly adjusted, if the charging speed is not appropriately controlled during charging in the hot rolling mill, it can be confirmed that a specific texture is not developed, and the surface properties, iron loss, and magnetic flux density are inferior.

### Example 2

The magnetic properties at various thicknesses were confirmed using steel types 1, 3, 4, 10, and 13 of the inventive examples.

**(Table 4)**

| | Front end portion charging speed | Rear end portion charging speed | Temperature deviation of bar | First cold-rolled sheet thickness (µm) | Second cold-rolled sheet thickness (µm) | B50 (Tesla) | Iron loss W10/400 (W/kg) |
|---|---|---|---|---|---|---|---|
| Steel Type 1 | 430 | 580 | 19 | 0.8 | 0.2 | 1.66 | 10.7 |
| | 430 | 580 | 19 | 0.7 | 0.15 | 1.65 | 9.4 |
| | 430 | 580 | 19 | 0.5 | 0.1 | 1.65 | 8.6 |
| Steel Type 3 | 380 | 700 | 16 | 0.8 | 0.2 | 1.68 | 10.9 |
| | 380 | 700 | 16 | 0.7 | 0.15 | 1.67 | 9.6 |
| | 380 | 700 | 16 | 0.5 | 0.1 | 1.66 | 8.8 |
| Steel Type 4 | 500 | 660 | 14 | 0.8 | 0.2 | 1.65 | 10.3 |
| | 500 | 660 | 14 | 0.7 | 0.15 | 1.64 | 9.3 |
| | 500 | 660 | 14 | 0.5 | 0.1 | 1.64 | 8.1 |
| Steel Type 10 | 720 | 1100 | 17 | 0.8 | 0.2 | 1.66 | 11.1 |
| | 720 | 1100 | 17 | 0.7 | 0.15 | 1.66 | 9.6 |
| | 720 | 1100 | 17 | 0.5 | 0.1 | 1.65 | 8.6 |
| Steel Type 13 | 480 | 870 | 11 | 0.8 | 0.2 | 1.66 | 10.5 |
| | 480 | 870 | 11 | 0.7 | 0.15 | 1.66 | 9.3 |
| | 480 | 870 | 11 | 0.5 | 0.1 | 1.64 | 8.0 |

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

## Claims

1. A non-oriented electrical steel sheet comprising:
in wt%, Si: 3.0 to 5.0%, Mn: 0.1 to 1.4%, and Al: 0.3 to 1.3%, with a balance being Fe and inevitable impurities,
wherein, when observing a 5mm × 5mm area of a surface thereof, a length of unevenness having a height difference of 1.0 µm or more with respect to an average height is 3 mm or less.

2. The non-oriented electrical steel sheet of claim 1, wherein
a magnetic flux density B50 is 1.603 + 0.96 × t² (T) or more with respect to a thickness t (mm) of the steel sheet, and an iron loss W10/400 is 7.231 + 21.385 × t (W/kg) or less.

3. The non-oriented electrical steel sheet of claim 1, further comprising
one or more of P: 0.1 wt% or less (excluding 0%), Sn: 0.1 wt% or less (excluding 0%), and Sb: 0.1 wt% or less (excluding 0%).

4. The non-oriented electrical steel sheet of claim 1, further comprising
one or more of C: 0.005 wt% or less (excluding 0%), N: 0.005 wt% or less (excluding 0%), S: 0.005 wt% or less (excluding 0%), Ti: 0.005 wt% or less (excluding 0%), Nb: 0.005 wt% or less (excluding 0%), and V: 0.005 wt% or less (excluding 0%).

5. The non-oriented electrical steel sheet of claim 1, further comprising
one or more of Cu: 0.005 to 0.2 wt%, Cr: 0.01 to 0.5 wt%, Ni: 0.05 wt% or less (excluding 0%), and Zn: 0.01 wt% or less (excluding 0%).

6. The non-oriented electrical steel sheet of claim 1, further comprising
one or more of Bi: 0.200 wt% or less (excluding 0%), Pb: 0.200 wt% or less (excluding 0%), Ge: 0.200 wt% or less (excluding 0%), and As: 0.200 wt% or less (excluding 0%).

7. The non-oriented electrical steel sheet of claim 1, further comprising
one or more of Mo: 0.03 wt% or less (excluding 0%), B: 0.0050 wt% or less (excluding 0%), Ca: 0.0050 wt% or less (excluding 0%), Zr: 0.005 wt% or less (excluding 0%), and Mg: 0.0050 wt% or less (excluding 0%).

8. A method for manufacturing a non-oriented electrical steel sheet, comprising:
a step of hot rolling a slab including, in wt%, Si: 3.0 to 5.0%, Mn: 0.1 to 1.4%, and Al: 0.3 to 1.3%, with a balance being Fe and inevitable impurities, to manufacture a hot-rolled sheet;
a step of cold rolling the hot-rolled sheet to manufacture a cold-rolled sheet; and
a step of annealing the cold-rolled sheet,
wherein, in the step of the hot rolling, a speed at which a front end portion of a rough-rolled bar is charged into a hot finish rolling mill is 300 m/min to 800 m/min, and a speed at which a rear end portion of the rough-rolled bar is charged is 1.25 times or more the speed of the front end portion thereof.

9. The method for manufacturing the non-oriented electrical steel sheet of claim 8, wherein
the slab further includes one or more of P: 0.1 wt% or less (excluding 0%), Sn: 0.1 wt% or less (excluding 0%), and Sb: 0.1 wt% or less (excluding 0%).

10. The method for manufacturing the non-oriented electrical steel sheet of claim 8, wherein
the slab further includes one or more of C: 0.005 wt% or less (excluding 0%), N: 0.005 wt% or less (excluding 0%), S: 0.005 wt% or less (excluding 0%), Ti: 0.005 wt% or less (excluding 0%), Nb: 0.005 wt% or less (excluding 0%), and V: 0.005 wt% or less (excluding 0%).

11. The method for manufacturing the non-oriented electrical steel sheet of claim 8, wherein
the slab further includes one or more of Cu: 0.005 to 0.2 wt%, Cr: 0.01 to 0.5 wt%, Ni: 0.05 wt% or less (excluding 0%), and Zn: 0.01 wt% or less (excluding 0%).

12. The method for manufacturing the non-oriented electrical steel sheet of claim 8, wherein
the slab further includes one or more of Bi: 0.200 wt% or less (excluding 0%), Pb: 0.200 wt% or less (excluding 0%), Ge: 0.200 wt% or less (excluding 0%), and As: 0.200 wt% or less (excluding 0%).

13. The method for manufacturing the non-oriented electrical steel sheet of claim 8, wherein
the slab further includes one or more of Mo: 0.03 wt% or less (excluding 0%), B: 0.0050 wt% or less (excluding 0%), Ca: 0.0050 wt% or less (excluding 0%), Zr: 0.005 wt% or less (excluding 0%), and Mg: 0.0050 wt% or less (excluding 0%).

14. The method for manufacturing the non-oriented electrical steel sheet of claim 8, further comprising
a step of heating the slab to a temperature of 1200°C or less before the step of manufacturing the hot-rolled sheet.

15. The method for manufacturing the non-oriented electrical steel sheet of claim 8, wherein
in the step of manufacturing the hot-rolled sheet, a step of manufacturing a bar by rough-rolling the slab; a step of finish-rolling the bar and a step of winding the finish-rolled hot-rolled sheet are included, and at the start of the finish-rolling step, a temperature difference between a region from the foremost end of the bar to 50 m and a region from the rearmost end to 50 m is 30°C or less.

16. The method for manufacturing the non-oriented electrical steel sheet of claim 8, wherein
in the step of manufacturing the hot-rolled sheet, a speed at which the slab is charged into a hot rolling mill is 40 m/min to 100 m/min.

17. The method for manufacturing the non-oriented electrical steel sheet of claim 8, further comprising
after the step of manufacturing the hot-rolled sheet, a hot-rolled sheet annealing step of annealing the hot-rolled sheet at 600 to 1100°C.

18. The method for manufacturing the non-oriented electrical steel sheet of claim 8, wherein
the step of manufacturing the cold-rolled sheet includes a step of first cold rolling the hot-rolled sheet to manufacture a first cold-rolled sheet;
a step of intermediate annealing the first cold-rolled sheet; and
a step of second cold rolling the first cold-rolled sheet to manufacture a second cold-rolled sheet.
